# EUROPEAN PATENT APPLICATION

(11) **EP 2 337 209 A2**
(43) Date of publication of application: **22.06.2011**
(21) Application number: 10015614.0
(22) Date of filing: 10.12.2010
(51) Int. Cl.: H02M 3/335

(54) **DC power supply circuit**

(30) Priority: 10.12.2009 IT GE20090096
(71) Applicant: R.G.M. S.p.A., 16153 Genova (IT)
(72) Inventor: Armanino, Gianfranco, 17012 Albissola Marina(Savona) (IT); Armanino, Luigi, 17015 Celle Ligure (Savona) (IT)
(74) Representative: Forattini, Amelia

(57) **Abstract**

A DC power supply circuit including an input stage having a bridge configuration and having static switches and respective diodes, the circuit being connected to the primary winding of an isolating transformer, the secondary winding thereof being in turn connected to a diode bridge connected to an output stage. The power supply circuit includes a DC voltage conversion means. The DC voltage conversion means has an operating frequency that is synchronous and double with respect to the operating frequency of the input stage having a bridge configuration, the stabilization of the output voltage can occur without varying the frequency, and all the static switches always switch in soft-switching conditions.

## Description

The present invention relates to a DC power supply circuit, adapted to supply power to high-power user devices.

Conventional input stages of power supply systems of this type are generally constituted by H-type bridges, which operate at a fixed frequency with forced switching and use one or more static switches connected in series in the individual bridge legs.

As an alternative to the case of multiple static switches connected in series, a circuit structure may use one or more H-type bridges, again with forced switching at a fixed frequency and connected in series, each of which is in a configuration of four static switches, or of two static switches plus two switching capacitors, and has its own isolating transformer, which is necessary in order to allow the correct organization of the connections of the outputs in order to achieve the performance at nominal voltage and power.

The above described conventional systems operate at a fixed frequency, so that the spectrum of constant-frequency harmonics, reflected on the power supply grid, is more easily predictable and controllable.

As an alternative, the input stage can also be of the resonant type, in which case the output parameters of the machine are generally adjusted by varying the operating frequency. The static switches operate in soft-switching conditions, with substantially nil switching losses, both when the switches are switched on and when they are switched off.

The resonant solution, with variable frequency, allows the connection of multiple static switches in series without encountering significant switching problems.

The conventional systems entail problems of various kinds. In the case of input stages operating at a fixed frequency with forced switching, static switches are subjected to high switching stresses, because they must simultaneously manage voltages and currents of considerable amplitude upon switching.

The stresses of the junctions in the static switches are thus very intense and the switching losses are high. The necessary reliability of the components is a delicate goal to implement and considerable protection devices are necessary.

Any serial connection of multiple static switches increases the switching problems and entails further circuit problems and sizing problems of the semiconductors.

In the case of an input stage of the resonant type, which normally operates at a variable frequency in order to utilize in an optimum manner the consequent flexibility of adjustment of the output parameters, despite minimal stresses and switching losses one must deal with the severe drawback of generating, in the power supply grid, a spectrum of harmonics whose frequency and amplitude are continuously variable and thus less easily predictable and controllable.

Torrico-Bascopé, Oliveira and Branco, in the article "A UPS With 110-V/200-V Input Voltage and High-Frequency Transformer Isolation", IEEE Transactions on Industrial Electronics, Vol. 55, No. 8, August 2008, disclose an isolated double-conversion uninterruptible power system with power factor correction using a high-frequency transformer and with input voltages equal to 110V/220V. The system is only suitable for light-duty applications at low voltage.

Also US-A1-2006/067655 discloses a motor driving apparatus, using a DC/DC converter and an inverter, which is suitable only for light-duty applications at low voltage.

The aim of the present invention is to provide a power supply circuit which, by virtue of specific circuit solutions, is capable of overcoming the problems described above.

Within the scope of this aim, an object of the invention is to provide a power supply circuit adapted to supply power to high-power user devices, with the possibility to adjust and stabilize the output even without varying the switching frequency, drawing power from high-voltage DC power supplies.

A further object of the invention is to provide a circuit that does not entail the use of complex devices or circuits but uses the potentialities of those that are already commercially available and commonly used.

A further object of the invention is to provide a device that is highly reliable, relatively easy to provide and at competitive costs.

This aim, as well these and other objects that will become better apparent hereinafter, are achieved by a DC power supply circuit, comprising an input stage having a bridge configuration and having static switches and respective diodes, said circuit being connected to the primary winding of an isolating transformer, the secondary winding of said isolating transformer being in turn connected to a diode bridge connected to an output stage, said power supply circuit furthermore comprising a DC voltage conversion means, **characterized in that** said DC voltage conversion means has an operating frequency that is synchronous and double with respect to the operating frequency of said input stage having a bridge configuration.

Further characteristics and advantages of the invention will become better apparent from the description of preferred but not exclusive embodiments, illustrated by way of non-limiting example in the accompanying drawings, wherein:

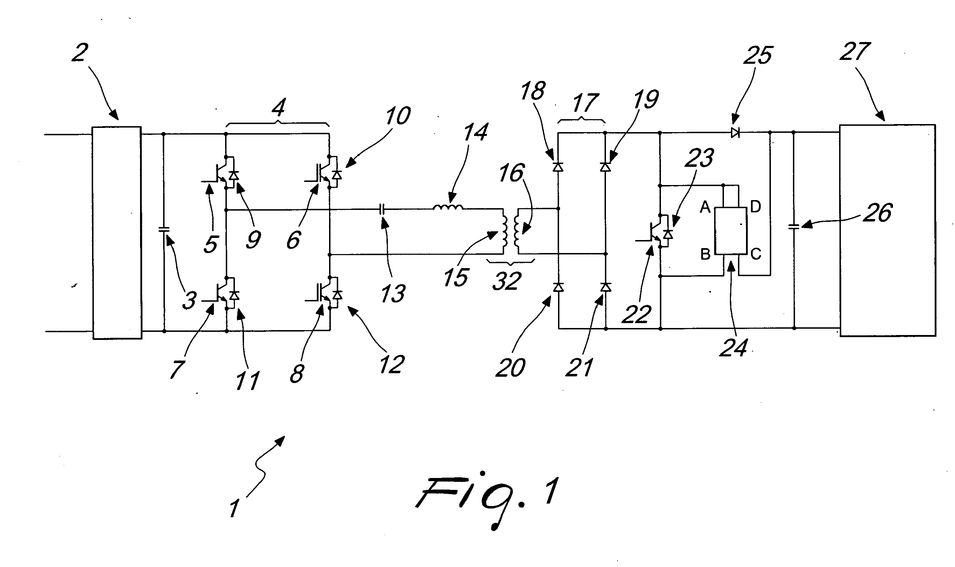

Figure 1 is a circuit diagram of a first embodiment of the power supply circuit according to the invention;
Figure 2 is a diagram of the waveform of the voltage and of the current at the primary winding of the isolating transformer, in nominal power supply voltage conditions;
Figure 3 is a circuit diagram of a second embodiment of the power supply circuit according to the invention;
Figure 4 is a circuit diagram of the protection device of the non-dissipative type;
Figure 5 is a time chart of the voltages and currents referred to the operation of the protection device of the non-dissipative type;
Figure 6 shows a further embodiment of the circuit diagram of Figure 1.

With reference to the cited figures, the circuit according to the invention, generally designated by the reference numeral 1, has in input an LRC filter 2, which is connected, by means of an input capacitor 3, to an input stage 4 having a bridge configuration, which is formed by four static switches 5, 6, 7 and 8, with which respective current recirculation diodes 9, 10, 11 and 12 are associated.

The leg of the H-type bridge that connects the switches 6 and 8 is connected to one end of the primary winding 15 of an isolating transformer 32. The other leg of the bridge, which connects the switches 5 and 7, is connected to one end of a resonant capacitor 13, which in turn, at its other end, is connected to a resonant inductor 14.

The resonant inductor 14 can be represented by the leakage inductance of the isolating transformer 32.

The resonant inductor 14 is connected to the other end of the primary winding 15 of the isolating transformer 32.

The isolating transformer 32 has a secondary winding 16, which is connected to a diode bridge 17, formed by four diodes 18, 19, 20, 21.

According to a first embodiment, the diode bridge 17 is connected in parallel to a DC voltage conversion means, which is constituted by a main static switch 22, which also has a respective current recirculation diode 23, and by a non-dissipative protection device 24, preferably an active snubber.

The reference letters "A", "B", "C" and "D" designate the connecting points of the active snubber 24.

The main static switch 22 is connected at one end to the anode of an output diode 25, so that the cathode of the output diode 25 and the other side of the main static switch 22, not connected to the output diode 25, constitute respectively the positive and negative poles. The positive and negative poles are also connected to an output capacitor 26, arranged in parallel, and supply the load 27, i.e., the end user device, which is preferably a three-phase inverter or a battery charger.

The operation of the device according to the invention is as follows.

According to this first embodiment, a DC voltage signal in input, conveniently filtered by the LRC filter 2, reaches the input stage 4 having a bridge configuration, which operates at a fixed high-value operating frequency, from where it is routed toward the isolating transformer 32 by virtue of the action of the static switches 5, 6, 7 and 8 of the input stage 4 having a bridge configuration and of the respective current recirculation diodes 9, 10, 11 and 12.

The switches of the input stage 4 having a bridge configuration always switch with nil current, both at power-on and at power-off, and as a consequence of this the switching losses are negligible.

Also, the switches of the input stage 4 are stressed, in each step of operation, by a maximum blocking voltage which typically is not greater than the maximum voltage in input to the stage.

The AC voltage signal reaches the isolating transformer 32 through the resonant capacitor 13 and the resonant inductor 14. The tuning frequency, in sinusoidal conditions, of the circuit formed by the resonant capacitor 13 and by the resonant inductor 14 corresponds, minus the switching idle times of the static switches 5, 6, 7 and 8, to the operating frequency of the input stage 4 having a bridge configuration.

In the passage from the primary winding 15 to the secondary winding 16, the transformer 32 transforms the value of the voltage, increasing or decreasing it as a function of the number of turns of the primary winding 15 and of the secondary winding 16.

The AC voltage signal in output from the secondary winding 16 of the isolating transformer 32 reaches the diode bridge 17 which, acting as a rectifier, receives in input the AC voltage that arrives from the isolating transformer 32 and converts it in output into a DC voltage.

The resulting voltage is then regulated and stabilized by the conversion means constituted by the main static switch 22 and by the active snubber 24. If they are placed at this point of the circuit, the conversion means provide a conversion of the DC voltage that allows to obtain an output voltage that is higher than that obtainable according to the transformation ratio. It is for this reason that, in this case, the main static switch 22 and the active snubber 24 are also indicated as step-up stage.

The step-up stage operates synchronously, and at twice the frequency, with respect to the operating frequency of the input stage 4 having a bridge configuration.

Also, the step-up does not require a specific serial switching inductor. For the same functional purpose, the step-up in fact operates by using the resonant inductor 14 at the primary winding of the isolating transformer 32.

The main static switch 22 always switches with nil current at power-on and nil voltage at power-off, with negligible switching losses. The presence of the two capacitors 40 and 41 of the active snubber 24 ensures control of the voltage transient dv/dt at power-off of the main static switch 22.

The active snubber 24 has a switch 42, whose duty cycle is constant and whose power-on command is synchronous with the one of the main static switch 22. In particular, the active power-on control of the switch 42 of the active snubber 24 is maintained for a time that corresponds to the half-period of resonance of the LC circuit that constitutes the active snubber 24, with the purpose of preventing the unwanted discharge of the capacitors. The switch 42 of the active snubber 24 operates with nil current both at power-on and at power-off and therefore it, too, has negligible load losses.

In output from the step-up there is, therefore, a DC voltage signal. The positive pole, the cathode of the output diode 25, and the negative output pole of the step-up supply power to the load 27. The load 27 can be a three-phase inverter or a battery charger. Because the entire circuit may operate at a constant frequency, the frequency of the harmonic reaction on the mains is invariant with respect to the operating conditions and load conditions and therefore can be calculated and controlled easily.

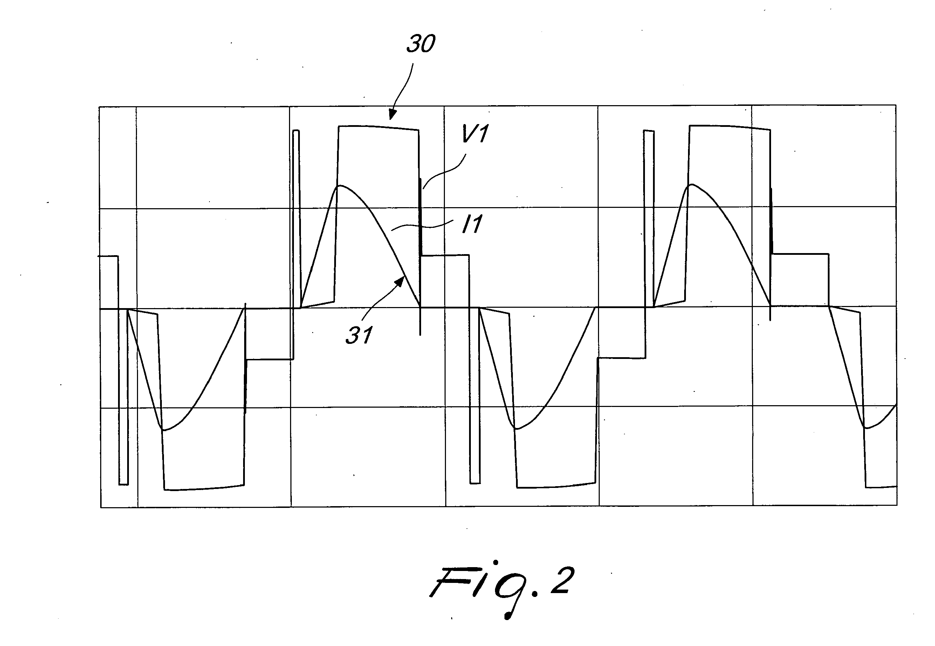

Figure 2 shows the behaviour of the voltage in input to the primary winding 15 of the isolating transformer 32 and the profile of the absorbed current, again at the primary winding 15 of the isolating transformer 32. The operating condition shown in figure 2 refers to an input voltage that is close to the nominal value.

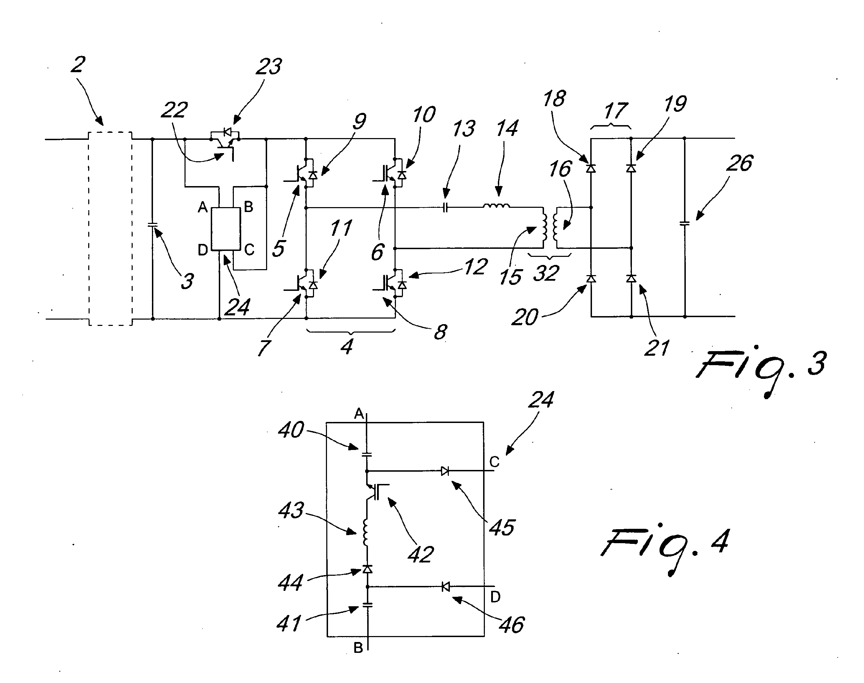

In a second embodiment, shown in Figure 3, the conversion means constituted by the main static switch 22, by the respective recirculation diode 23 and by the active snubber 24, which is arranged in parallel to the main static switch 22, are arranged directly downstream of the LRC filter 2 so as to form a step-down stage.

The function of this stage is to obtain an output voltage that is lower than that obtainable according to the transformation ratio. The step-down converter also operates synchronously, at high frequency, with respect to the fixed operating frequency of the input stage 4 having a bridge configuration.

In particular, like the previously described step-up stage, the step-down stage operates at twice the frequency with respect to the operating frequency of the input stage having a bridge configuration 4. The remarks related to the operation of the circuit that includes the step-down stage are the same ones already made earlier for the step-up stage, with the difference of ultimately obtaining in output a DC voltage that has a lower value than the input voltage.

Figure 4 shows the active snubber 24 in more detail. The active snubber 24 is constituted by two capacitors 40 and 41, which are arranged at the opposite ends of a leg that includes a switch 42, an inductor 43 and a diode 44. Two additional diodes 45 and 46 are located in two other legs that extend respectively from a point that lies between the capacitor 40 and the switch 42 and from a point that lies between the capacitor 41 and the diode 44.

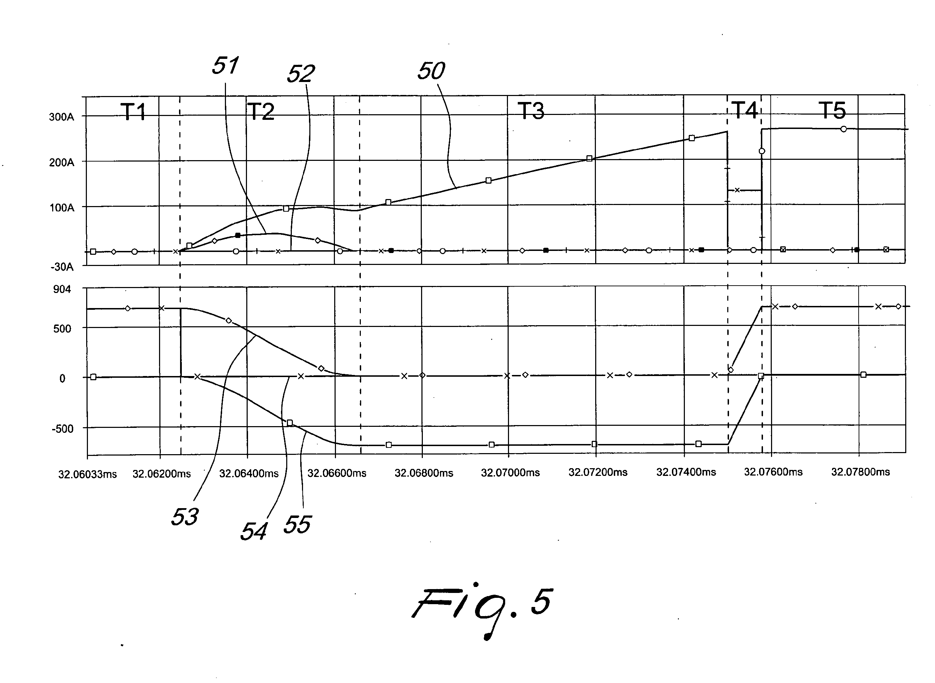

The time plot of the currents that flow across the various components of the active snubber 24 is represented by the curves 50, 51 and 52 of Figure 5. The curves 53, 54 and 55 represent, with reference to the same components, the behaviour over time of the voltages. In particular:
- 50 main IGBT current
- 51 auxiliary IGBT current
- 51 main DIODE current
- 53, 55 snubber capacitor voltages
- 54 main IGBT voltage

With reference to Figure 5, the operation of the active snubber 24, in association with a step-up stage controlled by the switching of the main static switch 22, goes through various steps.
- At the time T1, the main static switch 22 and the switch 41 of the active snubber are off, the capacitor 41 is charged to the reference voltage, which is fixed to a value equal to +V_{bus}, while the capacitor 40 is discharged.
- At the time T2, the power-on command is given to the main static switch 22 and to the switch 42 of the active snubber 42. By means of the circuit constituted by the capacitor 41, by the switch 42, by the inductor 43, by the capacitor 40 and by the main static switch 22, the energy previously accumulated in the capacitor 42 is transferred to the capacitor 41 according to a transient that is typical of series LC circuits.
- At the transition between T2 and T3, i.e., when the capacitor 40 has reached the voltage +-V_{bus} (V_{bus} references the voltage of the stabilized DC link) and the capacitor 41 has discharged completely, the power-off command is given to the switch 42 of the active snubber 24.
- At the transition between T3 and T4, the main static switch 22 is also switched off. With both switches switched off, the current in output at the diode bridge 17 flows across the diodes 45 and 46, which are internal to the active snubber 24. In particular, the current that flows across the diode 45 cause the capacitor 40, which had previously charged to -V_{bus}, to discharge. Vice versa, the current that flows across the diode 46 charges again the capacitor 41 at the voltage +V_{bus}. Simultaneously, the voltage across the main static switch 22 passes from a nil value to +V_{bus}, with the same dv/dt charging/discharging transient of the capacitors 41 and 40.
- At the time T5, with the capacitor 41 charged at the voltage +V_{bus}, the capacitor 40 discharged and the voltage across the main static switch 22 equal to +V_{bus}, one has returned to the initial condition.

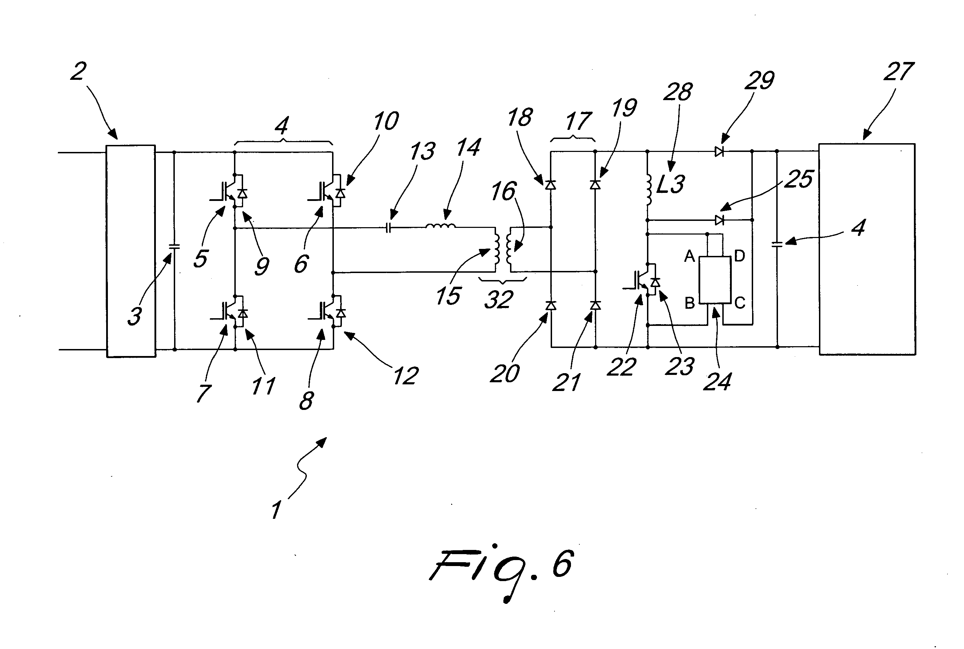

A further embodiment of the circuit diagram of the step-up converter is shown in Figure 6. The addition of the additional inductor 28 and of the rectifier diode 29 allows a direct control of the current transient di/dt during power-on of the main static switch 22 of the step-up stage, independently of the value of the resonant inductor 14, together with a reduction in the peak value of the resonant current.

In fact, as a consequence of the addition of the additional inductor 28, the resonant inductor 14 can have a smaller value. Such reduced inductance, possibly paired with a higher capacitance value associated with the resonant capacitor 13, entails a reduced voltage across the resonant LC circuit and a lower effective value of the current at the primary winding 15, and at the secondary winding 16 of the isolating transformer 32, for an equal power delivered in output. Consequently, the step-up stage must switch off a lower current value than the one referred to the configuration that lacks the additional inductor 28.

The overall DC conversion efficiency achieved by the described supply circuit, be it of the step-up or step-down type, is extremely high.

In practice it has been found that the circuit according to the invention fully achieves the intended aim, since it provides the DC power supply of high-power users, by means of a circuit for static energy conversion that operates at a high and constant frequency and has a regulated and stabilized voltage output.

The circuit according to the invention has been conceived in particular to supply DC power to user devices such as three-phase inverters or battery chargers. However, circuit according to the invention can in any case be used more generally as a DC voltage converter that is adapted to operate both with the function of obtaining a higher voltage than obtainable according to the transformation ratio and with the opposite function of obtaining a lower voltage.

This application claims the priority of Italian Patent Application No. GE2009A000096, filed on December 10, 2009, the subject matter of which is incorporated herein by reference.

## Claims

1. A DC power supply circuit, comprising an input stage having a bridge configuration and having static switches and respective diodes, said circuit being connected to the primary winding of an isolating transformer, the secondary winding of said isolating transformer being in turn connected to a diode bridge connected to an output stage, said power supply circuit furthermore comprising a DC voltage conversion means, **characterized in that** said DC voltage conversion means has an operating frequency that is synchronous and double with respect to the operating frequency of said input stage having a bridge configuration.

2. The circuit according to claim 1, **characterized in that** said static switches and respective diodes of said input stage having a bridge configuration can be one or more for each leg of said bridge.

3. The circuit according to one or more of the preceding claims, **characterized in that** said operating frequency, of said input stage having a bridge configuration, is fixed and constant.

4. The circuit according to one or more of the preceding claims, **characterized in that** said DC voltage conversion means comprises a main static switch comprising a respective diode and associated with a non-dissipative protection device.

5. The circuit according to one or more of the preceding claims, **characterized in that** said non-dissipative protection device is an active snubber.

6. The circuit according to one or more of the preceding claims, **characterized in that** said DC voltage conversion means is a means for increasing the voltage that can be obtained according to the transformation ratio.

7. The circuit according to one or more of the preceding claims, **characterized in that** said DC voltage conversion means is a means for decreasing the voltage that can be obtained according to the transformation ratio.
